# EUROPEAN PATENT APPLICATION

(11) **EP 1 102 222 A2**
(43) Date of publication of application: **23.05.2001**
(21) Application number: 00204014.5
(22) Date of filing: 15.11.2000
(51) Int. Cl.: G07F 17/16, G07F 19/00, G07F 7/00

(54) **Method, system, and apparatus for providing secure interactive services through an unattended modular kiosk**

(30) Priority: 16.11.1999 US 165662 P
(71) Applicant: Citicorp Development Center, Inc., Los Angeles, California 90066 (US)
(72) Inventor: Rizzo, Carol J., Livingstone, NJ 07039 (US); Do, Cuong D., Reseda, CA 91335 (US); Witman, Paul D., Simi Valley, CA 93065 (US); Caruthers, Douglas W., Los Angeles, CA 90066 (US)
(74) Representative: Hynell, Magnus

(57) **Abstract**

A method, system, and apparatus for providing secure interactive services through an unattended modular kiosk. The kiosk system includes a central or primary multimedia module adaptable for expanded capabilities with the addition of optional modules. The modular design allows the kiosk to be tailored to the needs of a targeted consumer group, while maintaining a limited footprint and reduced costs. The interactive modular kiosk provides consumers and businesses with a flexible and secure banking and financial services system that can operate in an unattended mode.

## Description

### CROSS-REFERENCE TO RELATED APPLICATIONS

This application claims priority to, and herein incorporates by reference, applicants' copending U.S. Provisional Application No. 60/165,662 filed November 16, 1999.

### FIELD OF THE INVENTION

The present invention relates generally to unattended interactive kiosks, and more particularly, but not by way of limitation, to methods, systems, and apparatus for providing secure financial services through an unattended interactive modular kiosk. The modular design of the kiosk allows for customization to optimally address a variety of needs.

### BACKGROUND

As the demand for direct access to convenient financial services increases, unattended systems, for example, automated teller machines (ATMs) and ATM-like devices are being placed at a variety of sites to facilitate consumer access. For example, ATMs are located in airports, work places, and shopping centers. To allow for broader and more cost effective distribution, these unattended systems are being designed with smaller footprints. The smaller footprints occupy less space and provide increased placement opportunities. However, the smaller footprints also result in "one dimensional" systems with limited functionality and flexibility. Increased functionality and flexibility, to include enhanced customer services and transactional security have been reserved for the larger, permanently fixed systems. These larger systems usually involve higher initial costs, and incorporate inflexible hardware, not easily modified to address changing consumer needs.

There is a need for an interactive kiosk that is modular in design, allowing for the flexibility of providing tailored and diverse services to different consumer groups during different time periods, while at the same time occupying a limited footprint and making efficient use of its technical capabilities. For example, cost concerns may require that peripheral components be added well after the initial purchase of the kiosk system. The inventive kiosk system is flexible enough to be enhanced and extendible over time. The kiosk system may be placed in a newly opened office building with a growing number of tenants. As the number of tenants increases, and the needs of the tenants become more apparent, optional modules may be added to the kiosk to better serve those needs, whether the needs be, for instance, traditional banking, stock transactions, or airline reservations and ticketing.

The durability of a kiosk is also a major consideration. There is a need for an interactive kiosk to have a small enough footprint and yet the durability to be placed on, for example, a transportation platform, such as, watercrafts, aerospace and land vehicles, and people movers in general. Further, as an example, as a kiosk-equipped transportation platform moves globally, there is a need for a kiosk that can be reconfigured with different monetary dispensing and depositing modules adapted for the currency of a particular region.

Reconfiguration flexibility is further needed for the purpose of catering to changing and evolving consumer needs. For example, a convention center may on one occasion host a group of consumers who highly value access to tools to perform stock transactions, and on other occasions, a different group of consumers may only be interested in the purchase of event tickets, such as sightseeing and theater tickets. Further, at a lengthy convention, the consumer needs at the end of a convention may be very different than the needs at the beginning of the convention. For example, consumers at the end of a convention may desire the ability to deposit and receive different national currencies or other non-traditional currencies such as frequent flier miles, unique reward coupons, or value tokens. Reconfiguration flexibility is also required to provide enhanced accommodations for disabled consumers, for example, optional modules are needed to provide voice recognition and interaction, enlarged print viewing monitors, and the printing of Braille documents.

The modular design allows the purchase of a central or primary module or modules which will result in a lower unit cost through economies of scale. This will also allow for reduced maintenance and training costs. The optional "sidecar" module feature makes it easier to accommodate anticipated advancements in technology.

The traditional, limited footprint ATMs have been generally inadequate not only from the standpoint of flexibility, but also, in terms of the advanced capabilities, physical and transactional security, and the efficiency desired by an increasingly sophisticated consumer. For example, there is a need for advanced security procedures beyond that of matching personal identification numbers with a corresponding magnetic stripe card. Advanced transactional security procedures include biometric identification through biological or behavior characteristics, for example, identification through iris, fingerprint, and voice authentication measures. Advanced encryption techniques are also needed for secure electronic transactions, as well as, the ability to utilize electronic cash and electronic payment schemes. Further, there is a need for enhanced physical security features for unattended systems located in high crime areas or used during high crime periods.

Additionally, the use of microcomputers, for example, Personal Digital Assistants (PDAs) and wireless communication devices, such as, wireless telephones, are increasing and kiosks that interact with these devices are needed to better serve consumers.

Therefore, there is a need for a method, system, and apparatus for providing secure financial services through an unattended interactive modular kiosk.

### SUMMARY OF THE INVENTION

The present invention overcomes the above-noted and other shortcomings by providing a novel and improved method, system, and apparatus that meet the aforementioned needs.

It is an advantage of an unattended modular kiosk to meet these needs, and others, through a method, system, and apparatus that provides secure interactive services. The interactive modular kiosk provides consumers and businesses with a flexible and secure services solution for unattended, limited-footprint interactive kiosks. These services involve, as examples, financial services and banking services. The interactive modular kiosk offers continuous availability to the consumer. Further, the present invention offers secure personalized service through two-way video, voice, infrared, and other data transmissions. The present invention includes configurable sidecar options, or optional modules, which provide, for example, deposit and dispensing capabilities for a wide variety of medium (cash, coupons, tickets, etc.).

The present invention also provides customers with the ability to transact over the Internet, obtain account information, buy event tickets, exchange currencies, transfer funds between accounts, pay bills, buy and sell stocks, perform customer enrollment, open new accounts, apply for loans and verify signatures.

The durability, portability, and flexibility of the present invention allows for placement at a variety of locations, including stationary sites and transportation platforms.

Further, the optional modules provide enhanced accommodations for disabled consumers, for example, the use of voice recognition and response, enlarged print viewing monitors, and the printing of Braille documents.

The modular design allows for a purchase of central or primary multimedia modules which may result in lower unit cost through economies of scale. The modular design also allows for greater commonality of components and reduced maintenance and training costs. The optional sidecar module feature makes it easier to incorporate anticipated advancements in technology. In one embodiment, the sidecar modules themselves have an optional component in addition to a main component, thereby further enhancing the flexibility of the inventive kiosk system.

Further, the present invention incorporates advanced security processes beyond that of matching personal identification numbers with a corresponding magnetic stripe card. Advanced transactional security procedures include biometric identification of biological and behavioral features, such as identification through iris, fingerprint, hand, and voice authentication measures. Advanced encryption techniques are also provided for secure electronic transactions, as well as, the ability to utilize electronic cash and electronic payment schemes. Further, the modular flexibility of the present invention provides enhanced physical security features, such as cameras showing a view of the area around the kiosk, emergency signaling devices, alarms, and lock boxes.

The present invention also provides the capability for consumers to use their miscomputing devices, such as wireless telephones and Personal Digital Assistants (PDAs), laptop computers, or other microcomputer based devices to interact with the kiosk through infrared, radio frequency, physical docking, and other channels of data transmission.

The central component of the interactive modular kiosk is the central multimedia module. The central multimedia module, like the optional sidecar modules, incorporate main components, as well as, optional components. One embodiment of the multimedia module comprises the following main components: Large visual display, NT server engine for local or remote device connectivity, receipt printer, speakers and a customer service phone. Optional components of one embodiment include card readers, reduced and full size laser printers, high resolution scanners, cameras, speakers, microphones and iris recognition devices. In addition, an integral or detached seating apparatus incorporating features such as speakers and sensory recognition are also optional. Several configurable sidecar options are available to complement the transactional capability of the multimedia module. Embodiments of the present invention are provided with left-handed or right-handed installation options, or a full-function configuration (central multimedia module with left and right sidecar attachments). The number of optional modules to the left or right of the central multimedia module is not limited. Some embodiments of the sidecar optional modules include:
A. Check/Envelope Depository module embodiment. This embodiment of the present invention contains an optional upper component cabinet, which is configured with an airline ticket printer. Other embodiments include a coupon/ticket printer or a card issuance module. The lower main component cabinet houses the check imaging and envelop depository unit. This unit is able to verify deposit amounts, print check amounts with ink designed for Magnetic Ink Character Recognition (MICR), print endorsements, and accept envelop deposits. This sidecar module is configured in either a right hand or left hand configuration with respect to the central multimedia module.
B. Cash/Envelope Depository module embodiment. This embodiment of the present invention contains an optional upper component cabinet, which is configured with an airline ticket printer, a coupon/ticket printer, or a card issuance module. The lower main component cabinet houses a cash acceptor and envelop depository unit. The depository unit of this embodiment accepts up to four denominations of cash, optically authenticates the cash, rejects bad notes on-the-fly, collects deposited notes into a lock box, and accepts envelop deposits. This sidecar module is configured in either a right hand or left hand configuration with relation to the central multimedia module.
C. Cash and Media Dispensing module embodiment. A further embodiment contains an optional upper component cabinet, which is configured with an airline ticket printer, a coupon/ticket printer or a card issuance module. The lower main component cabinet houses a cash dispenser. This embodiment dispenses a variety of media including cash, cards, etc. It is also configured in either a right hand or left hand configuration with respect to the central multimedia module.

Embodiments of the overall system architecture of the present invention support customer interface through wireless devices over a secure link. Attached peripherals or optional sidecar modules are configured locally or remotely (over a Local Area Network (LAN)). The present invention leverages the benefits of reduced cabling, flexible configurations for restricted floor space, and mobilization as the modular units and sidecars are easily transportable and reconfigurable. An embodiment of the interactive modular kiosk is Windows NT based and supports a multiple application server environment. Other embodiments encompass other network operating systems.

An embodiment of the invention encompasses a method for providing interactive services, comprising the steps of: providing a kiosk having a primary module, said primary module capable of stand alone operation; designing said kiosk to permit its reconfiguration by connecting said primary module to at least one optional module; and enabling a user at said kiosk to conduct interactive communications through said kiosk.

Another embodiment of the invention includes a kiosk for providing interactive services, comprising: a central multimedia module capable of stand alone operation; at least one optional module; a transceiver for wireless transmitting data between said central multimedia module and said at least one optional module, wherein said kiosk provides additional services to a user resulting from the data transmission between said multimedia module and said at least one optional module.

Additional objects, advantages and novel features of the invention will be set forth in part in the description that follows, and in part will become more apparent to those skilled in the art upon examination of the following or upon learning by practice of the invention.

### BRIEF DESCRIPTION OF THE FIGURES

In the drawings:
FIGURE 1 is a perspective view of one embodiment of the present invention;
FIGURE 2 is a perspective view of another embodiment of the present invention;
FIGURE 3 is a diagram illustrating the system infrastructure of one embodiment of the present invention;
FIGURES 4A, 4B, and 4C are perspective views of three embodiments of the present invention; and
FIGURE 5 is a diagram illustrating the system architecture of one embodiment of the present invention.

### DETAILED DESCRIPTION

Reference will now be made in detail to the several embodiments of the invention, one or more examples of which are illustrated in the accompanying drawings. Each example is provided by way of explanation of the invention, not as a limitation of the invention. It will be apparent to those skilled in the art that various modifications and variations can be made in the present invention without departing from the scope or spirit of the invention. For instance, features illustrated or described as part of one embodiment can be used on another embodiment to yield a still further embodiment. As an example, the orientation of the visual display device, data input devices and optional modules are not limited to a horizontal, vertical, or any other particular orientation. Additionally, the present invention may be made integral to generally permanent structures. It is intended that the present invention covers such modifications and variations that come within the scope of the appended claims and their equivalents.

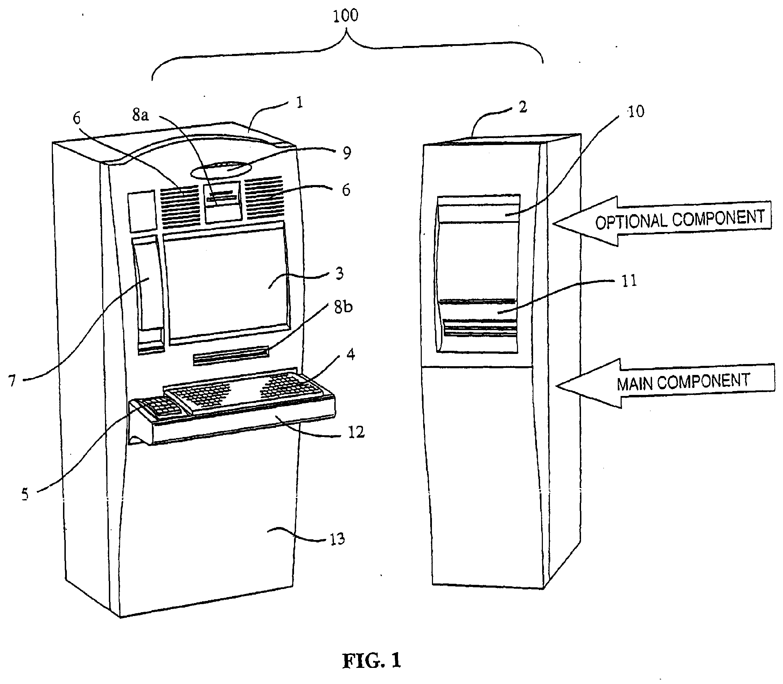

The present invention comprises an unattended interactive modular kiosk system. Referring to **FIG. 1**, an embodiment **100** of the kiosk system comprises a central or primary multimedia module **1** and optional sidecar module/s **2**.

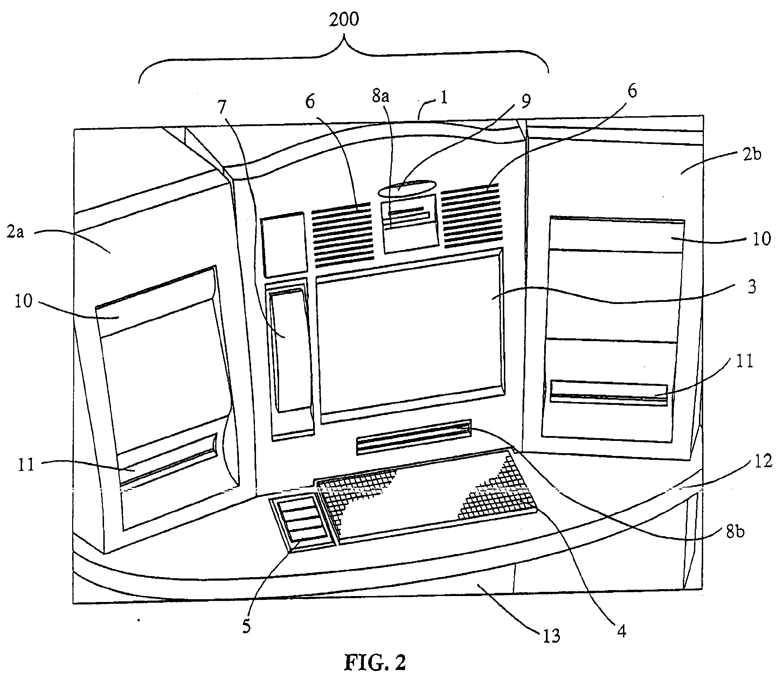

As best shown in the system embodiment **200** depicted in **FIG. 2**, the central multimedia module **1** comprises a visual display device **3** and data input devices **4, 5**. Audio output devices **6** and an audio input device **7** are provided. Also provided on the central multimedia module **1** is a media input/insertion device **8a**, for example, for insertion of an identification card, and a media dispensing device **8b**. The embodiment also comprises a processing unit **13** and an identification/observation device **9**. Other embodiments of the multimedia module **1** includes a high resolution scanner and reduced or full size laser printer incorporated as part of the media input/insertion device **8a** and media dispensing device **8b**.

One embodiment of the central multimedia module **1** includes a visual display device **3** incorporating a Windows-based terminal with a large liquid crystal display (LCD). Further embodiments include a visual display device **3** that is a touch screen, requiring the user to use a finger, or pointing tools, as a way of inputting data. Embodiments comprise Windows NT Server Hydra (local or remote).

In further embodiments, the media dispensing device **8b** includes a receipt printer. Embodiments include an audio input device **7**, such as, a wireless or land-line customer service phone. The audio input device **7** may be a handset or exposed microphone. The media input/insertion device **8a** includes a card reader (reading both magnetic stripe card and/or smart cards, or other readable medium). The identification/observation device **9** includes a device for biometric identification and/or a camera for the purposes of security and/or interactive videoconferencing. The biometric identification device of one embodiment includes iris recognition of the user for authentication and verification. The biometric identification device provides for biometric enrollment.

Embodiments of the kiosk system perform a variety of functions and can be used in a variety of applications, not necessarily limited to purely financial transactions. Embodiments of the multimedia module **1**, as well as, optional sidecar modules **2** are available continuously. Therefore, consumers have access seven days and week and twenty-four hours a day.

The multimedia module **1** allows the user to engage in interactive sales and service, submit and respond to inquiries, send and receive e-mail, send and receive encrypted messages, view television broadcasts, listen to radio broadcasts, interact with a variety of audio/visual devices, conduct transfers of funds, pay bills, buy and/or sell stocks and/or securities, and conduct biometric enrollment. The multimedia module **1** provides for secure personalized service via two-way video transmissions and biometric (for example, eye, voice, hand, and fingerprint) identification/authentication. The multimedia module **1** also captures documents and identification cards, or other media when appropriate, for example, if an identification card has been reported stolen. It also serves as a channel for the opening and establishment of new accounts, and for the servicing of existing accounts. Loan applications can be submitted and there is a signature capture so that authenticity is verified at the multimedia module **1**. In addition, other embodiments possess other authenticating processes. It should be apparent to those skilled in the art that the devices and features of the central multimedia module **1** may be incorporated on an optional sidecar module **2** and vice versa.

A further embodiment of the kiosk system provides full-function and system banking. Additional embodiments include a central multimedia module **1** and optional modules **2** providing for Internet access, business and personal (B & P) account cash depositing, and domestic cash dispensing and foreign currency dispensing.

Additional embodiments of the kiosk system comprise optional sidecar modules **2**, wherein the optional sidecar modules **2** include further optional components, for example, components for printing airline tickets and coupon/event ticket printing, airline ticket distribution, event ticket seat selection and distribution, and the immediate issuance of credit and debit cards.

In a further embodiment, access for the disabled is provided on the central multimedia module **1** and further enhanced by optional sidecar modules **2**. These features may also be provided exclusively on the central multimedia module **1** or on the optional sidecar module **2**. Embodiments of the kiosk system provides for voice recognition and interaction through the audio input device **7**, visual display devices **3** that provide enlarged print viewing, and media dispensing devices **8b**, for example, printing of Braille documents. Visual display devices **3** are not limited to the central multimedia module **1**, but may also be incorporated into optional sidecar modules **2**. Embodiments provide for the media dispensing device **8b** of the central multimedia module **1** and the media dispensing device **10** of the optional sidecar modules **2** to be interchangeable. This interchangeability is also applicable with the media input/insertion device **8a** of the central media module **1** and the depository device **11** of the optional sidecar modules **2**.

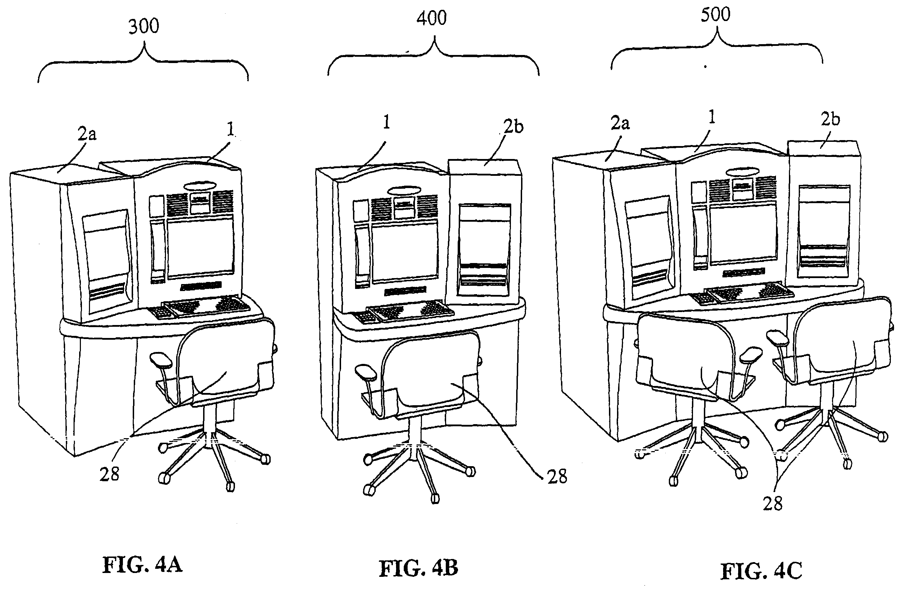

The kiosk system may be a stand-up, counter-like embodiment or may be provided as a sit down embodiment. **FIGS. 4A, 4B,** and **4C** show embodiments **300**, **400**, and **500**, respectively, where the optional sidecar module **2a** is attached to the left of the central multimedia module **1**, the optional sidecar module **2b** is attached to the right of the central multimedia module **1**, and the optional sidecar modules **2a** and **2b** are on opposing sides of the central multimedia module **1**. Other embodiments include additional modules, for example, an embodiment may include ten optional modules **2** to the left of the multimedia module **1** and none to the right of the multimedia module **1**. Further embodiments provide a generally horizontal surface **12**, **FIG. 2**, on which a data entry device **4, 5** exists, for example a keyboard. Other embodiments include a downwardly angled surface. The generally horizontal surface **12** may also extend to the optional modules and provide a work surface for the user. In other embodiments, seating structures **28** are provided and are either integral or detached from the central multimedia module **1** or the optional sidecar module **2**. Embodiments provide for seating structures **28** with audio input/output devices and controls for the kiosk functions.

Referring to **FIG. 2**, the optional left and right sidecar modules **2a** and **2b**, respectively, include a media dispensing device **10** and a media depository device **11**. An embodiment of the sidecar modules **2a, 2b** incorporates the media dispensing device **10** as the optional component and the media depository device **11** as a main component of the sidecar modules **2a, 2b**. One embodiment includes a media depository device **11** that performs as a check imaging/envelope depository device. This device lifts the images on both sides of a check with, for example, 300 DPI resolution, and utilizes both Computer-Assisted Retrieval Systems (CAR) and CAV to verify the deposit amount. The device in this embodiment prints the check amount on the front of the check with MICR ink and prints the endorsement on the back of the check, with, for example, an inkjet. The device reads by MICR/OCR all formats E-13A/B, CMC-7. Furthermore, the media depository device **11** in this embodiment accepts up to a quarter inch thick envelope with one envelope bin and three check bins. Embodiments of the media dispensing device **10** includes an airline ticket printer, coupon/tickets printer, and/or cards issuance device.

In another embodiment, the media depository device **11** of the optional sidecar module **2** includes a cash/envelope depository system comprising a cash acceptor and envelope depository that accepts bundles of cash. For example, the envelop depository in this embodiment can accept bundles of cash up to four denominations. Magnetic or optical authentication is utilized to authenticate the deposits. Bad notes are rejected "on-the-fly." Good notes are escrowing in a drum waiting for confirmation. The cash acceptor and envelope depository further comprise a lock box where the deposited notes are held. The size of the envelope accepted will vary as to the size preferred. One skilled in the art would appreciate that the number of envelope bins and cash lock boxes may be varied by varying the size of the module **2** and/or by varying the size or positioning of the lock boxes.

In a further embodiment, the media depository device **11** of the optional sidecar module **2** includes a cash acceptor allowing cash deposits and B & P account cash depositing. Other embodiments of the cash acceptor include, for example, four-denomination cash bundle acceptance, cash authentication, bad note rejection, and deposit lock boxes.

Other embodiments of the media depository device **11** of the optional sidecar module **2** are provided wherein the optional sidecar module **2** comprises a check imaging system. The check imaging system examines the image of a deposited check, deposited envelope, or document. The imaging of the check occurs, for example, when a check is cashed at the kiosk. Additional features provided on additional embodiments include deposit amount verification, check amount printing, and endorsement printing.

The media dispensing device **10** of an embodiment of an optional sidecar module **2** includes a cash/media dispensing system. The cash/media dispensing system comprises, in one embodiment, a friction-pick cash dispenser. Optional components may likewise be added to the media dispensing device **10**. Other embodiments include an airline ticket printer and/or coupon/event ticket printer and/or cards issuance device. Further embodiments dispense currency. "Currency" is to include any medium that possesses value, including cash, frequent flier mileage cards, stamps, etc. The cash dispensing system dispenses for example, cash, phone cards, mass transit cards, etc. of varying sizes, weight, and structure.

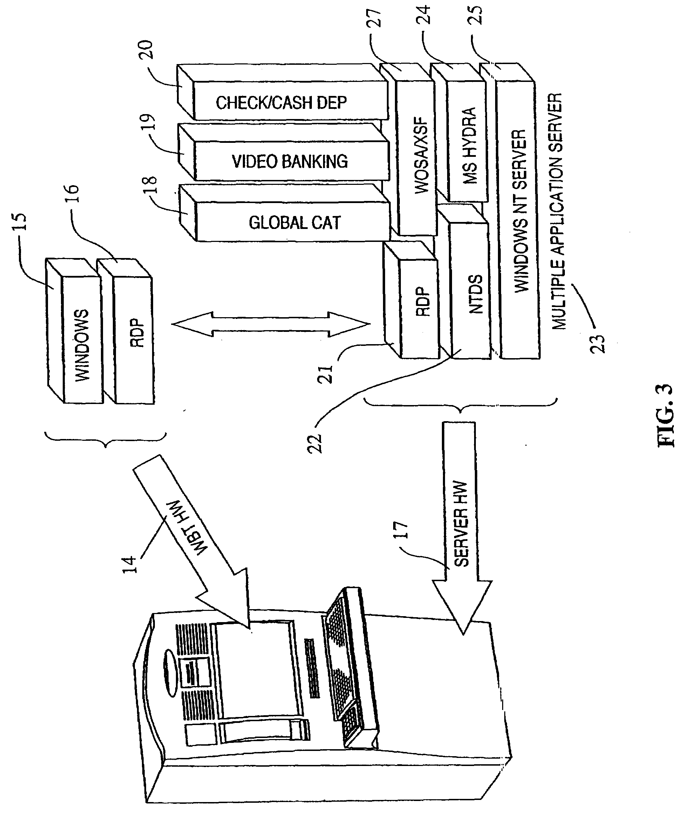

**FIG. 3** is a representation of an infrastructure for one embodiment of the present invention. The server hardware **17** includes a computing device running, for example, Windows NT **25**. The multiple application server **23** supports multiple applications, such as, Global CAT **18**, Video Banking **19**, and Check/Cash Deposits **20** by utilizing Microsoft Hydra **24**, Windows Open System Architecture (WOSA)/XSF **27**, NTDS **22**, and Remote Desktop Protocol (RDP) **21**. One embodiment incorporates Windows-Based Terminal hardware **14** utilizing Windows **15** and RDP **16**.

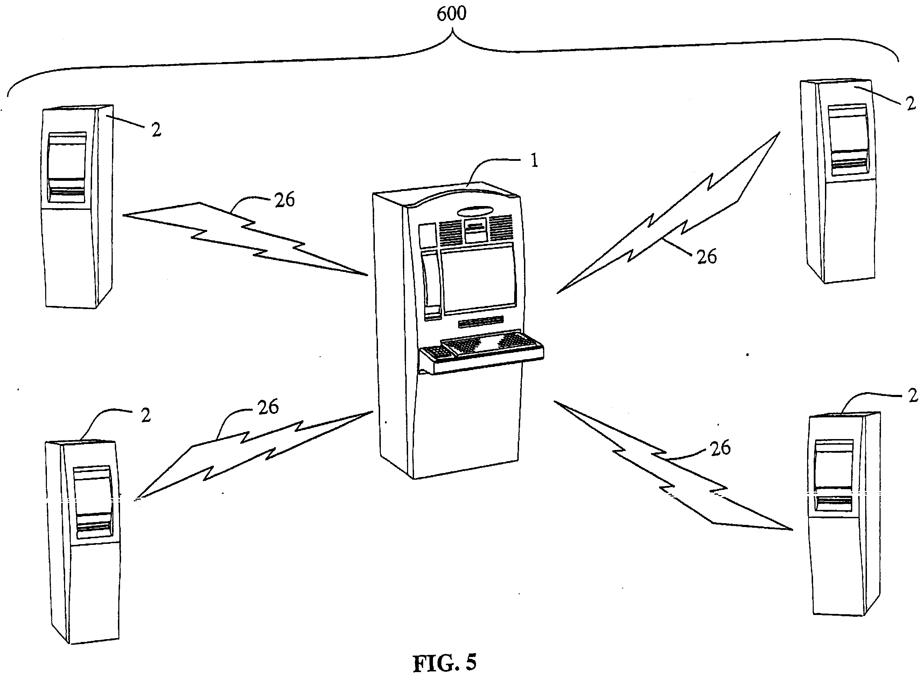

In **FIG. 5**, an embodiment **600** showing the system architecture is provided. In this embodiment, the central multimedia module **1**, which serves as the customer interface terminal, is connected via a wireless link to the optional sidecar modules **2**. These sidecar modules are place at varied distances from the central multimedia module **1**. In the embodiment shown **600**, there are four optional sidecar modules 2 linked by secure wireless communication **26** with the central multimedia module **1**. One embodiment utilizes a Bluetooth link, providing the benefits of reduce cable entanglements, flexible installation, flexible configuration and flexible mobilization. The Bluetooth transceiver links the optional sidecars, universal serial bus devices, and host connection options of Local Area Network/Wide Area Network (LAN/WAN), POD/DSL, and Integrated Services Digital Network (ISDN)/Frame Relay.

The present invention also includes a method of providing secure interactive services through an unattended modular kiosk. The method includes linking a central multimedia module **1** and optional sidecar modules **2**. This method provides deposit and dispensing capabilities for a wide variety of medium (cash, coupons, tickets, etc.).

The method also includes providing customers with the ability to transact over the Internet, obtain account information, transfer funds between accounts, pay bills, buy and sell stocks, perform customer enrollment, open new accounts, apply for loans and verify signatures. The method further includes displaying on a visual display device **3**, for example a liquid crystal display, information to the consumer, and providing an NT server engine **25** for local or remote device connectivity, media dispensing device **10** and a media depository device **11**, audio output device **6** and an audio input device **7**.

The method further includes utilization of card readers, laser printers of a variety of sizes, high resolution scanners, cameras, microphones and iris recognition devices; selecting left-handed **2a** or right-handed **2b** sidecar module installation options, or a configuration with both left-handed **2a** or right-handed **2b** sidecar modules **200**; and incorporating a Check/Envelope Depository device as a media depository devices **11**.

The method includes selecting an optional upper component cabinet of an optional sidecar module **2** to be configured with an airline ticket printer, a coupon/ticket printer or a card issuance module. The method further includes supplying a lower main component cabinet for housing the check imaging and envelop depository unit for verifying deposit amounts, printing check amounts with MICR ink, printing endorsements, and accepting envelop deposits.

The method also comprises the step of adding to an optional sidecar module **2** an optional upper component cabinet which is configured with an airline ticket printer, a coupon/ticket printer or a card issuance module, and providing in a lower main component housing a cash acceptor and envelop depository unit. The method providing for optically authenticating the cash, rejecting bad notes on-the-fly, collecting deposited notes into a lock box, and accepting envelop deposits.

The method also includes providing a Cash and Media Dispensing device, an embodiment of which, contains an optional upper component cabinet, which can be configured with an airline ticket printer, a coupon/ticket printer or a card issuance module. Additionally, providing the lower main component cabinet for housing the cash dispenser. Further, the method involves dispensing a variety of media including cash, cards, etc.

The method includes supporting customer interface through wireless devices over a secure link with a central multimedia module **1**, attached peripherals, or sidecar modules **2** that are configured locally or remotely (over a LAN). The method further comprising reducing cabling; increasing configurations for restricted floor space; mobilizing the modular units and sidecars; utilizing Windows NT; and supporting a multiple application server environment.

Embodiments of the present invention have now been described in fulfillment of the above objects. It will be appreciated that these examples are merely illustrative of the invention. Many variations and modifications will be apparent to those skilled in the art.

## Claims

1. A method for providing interactive services, comprising the steps of:
providing a kiosk having a primary module, said primary module capable of stand alone operation;
designing said kiosk to permit its reconfiguration by connecting said primary module to at least one optional module; and
enabling a user at said kiosk to conduct interactive communications through said kiosk.

2. The method of Claim 1, wherein said connection to at least one optional module is wireless.

3. The method of Claim 1, further comprising the step of:
providing data transmissions between said kiosk and a microcomputer-based device of said user.

4. The method of Claim 3, wherein said microcomputer-based device is a personal digital assistant.

5. The method of Claim 1, further comprising the step of:
making additional services available to said user through said at least one optional module.

6. The method of Claim 1, further comprising the step of:
conducting an identification of said user of said kiosk.

7. The method of Claim 6, wherein said identification comprises biometric identification.

8. The method of Claim 7, wherein said biometric identification comprises iris identification.

9. The method of Claim 1, wherein said primary module is physically separate from said at least one optional module.

10. The method of Claim 1, wherein said primary module is a multimedia module.

11. The method of Claim 1, wherein said interactive communications is secure.

12. The method of Claim 5, wherein said additional service includes a service chosen from a group consisting of check cashing, cash depositing, or cash withdrawal.

13. The method of Claim 1, further comprising the step of:
providing Internet access to said user.

14. The method of Claim 5, wherein said additional service enables buying and selling of stocks and securities.

15. The method of Claim 1, further comprising the step of:
conducting biometric enrollment of said user.

16. The method of Claim 5, wherein said additional service includes a service chosen from a group consisting of event ticket printing or transportation ticket printing.

17. The method of Claim 5, wherein said additional service includes a service chosen from a group consisting of dispensing of phone cards or dispensing of mass transit cards.

18. The method of Claim 5, wherein said additional service includes a service chosen from a group consisting of seat selection for transportation platforms or seat selection for events.

19. A kiosk for providing interactive services, comprising:
a central multimedia module capable of stand alone operation;
at least one optional module;
a transceiver for wireless transmitting data between said central multimedia module and said at least one optional module, wherein said kiosk provides additional services to a user resulting from the data transmission between said multimedia module and said at least one optional module.

20. The kiosk of Claim 19 wherein said at least one optional module comprises a media depository device.

21. The kiosk of Claim 19 further comprising a biometric identification device for identifying said user.

22. The kiosk of Claim 21 wherein said biometric identification device is an iris identification device.

23. The kiosk of Claim 19 wherein said interactive services provided to said user of said kiosk is secure.

24. The kiosk of Claim 19 wherein said central multimedia module is physically separate from said at least one optional module.

25. The kiosk of Claim 19 further comprising:
at least one seating surface;
a visual display device;
a data input device;
an audio input device;
an audio output device;
a media input/insertion device;
a media dispensing device; and
a processing unit.
